Europäisches Patentamt

European Patent Office

Office européen des brevets

(19)

(11) Publication number: **0 147 037**
**B1**

# (12) EUROPEAN PATENT SPECIFICATION

(45) Date of publication of patent specification: **01.06.88**

(51) Int. Cl.⁴: **G 21 C 17/06**

(21) Application number: **84307643.1**

(22) Date of filing: **06.11.84**

(54) **Apparatus for measuring the pitch between adjacent rods in a nuclear fuel assembly.**

(30) Priority: **19.12.83 US 562878**

(43) Date of publication of application:
**03.07.85 Bulletin 85/27**

(45) Publication of the grant of the patent:
**01.06.88 Bulletin 88/22**

(84) Designated Contracting States:
**BE CH DE FR GB IT LI NL SE**

(56) References cited:
**EP-A-0 053 066**
**EP-A-0 064 454**
**FR-A-2 341 183**
**US-A-3 225 294**

(73) Proprietor: **THE BABCOCK & WILCOX COMPANY**
**1010 Common Street P.O. Box 60035**
**New Orleans Louisiana 70160 (US)**

(72) Inventor: **Roseveare, Ronald Newman**
**Route 1, Box 74**
**Evington Virginia 24550 (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to apparatus for measuring the pitch between adjacent rods in a nuclear fuel assembly, for example a fuel assembly for a light water-cooled reactor or the like.

Such a measurement is of importance, as variation in pitch between adjacent rods beyond established tolerances indicates that the coolant flow area, or coolant channel area as it is sometimes called, will likewise be beyond established tolerances, thus causing maldistribution of coolant flow through the fuel assembly.

US-A-4 464 332 (and corresponding European patent Application publication No. EP-A-O 053 066) discloses apparatus for measuring the pitch between adjacent rods in a row of spaced-apart rods in a nuclear fuel assembly, the apparatus comprising a support plate, a carriage, and a wand dimensioned to traverse the row of rods and extensibly appended from the carriage, the carriage being slidably mounted on the support plate for transversely moving the wand along the row of rods.

The present invention provides apparatus for measuring the pitch between adjacent rods in a row of spaced-apart rods in a nuclear fuel assembly, the apparatus comprising a support plate, a carriage, and a wand dimensioned to traverse the row of rods and extensibly appended from the carriage, the carriage being slidably mounted on the support plate for transversely moving the wand along the row of rods, the apparatus being characterised by:

a pair of spaced-apart, non-contacting proximity sensors attached to the wand so as consecutively to pass by each of the rods in the row of rods and generate a first and a second output signal, respectively, corresponding to its proximity to a rod as it passes by the rod, the sensors being spaced apart less than the outside diameter of the rod of smallest diameter in the row of rods;

means for generating a unique signal when the first and second signals are of equal magnitude; and

means for measuring the linear movement of the carriage in transversely moving the wand along the row of rods.

As the wand traverses a row of rods in a fuel assembly, a unique output signal is produced when the sensors are equally distant from a rod or adjacent rods. Measuring the distance between the occurrence of alternate unique signals provides a measure of the pitch between adjacent rods.

The invention will now be further described, by way of illustrative and non-limiting example, with reference to the accompanying drawings, in which:

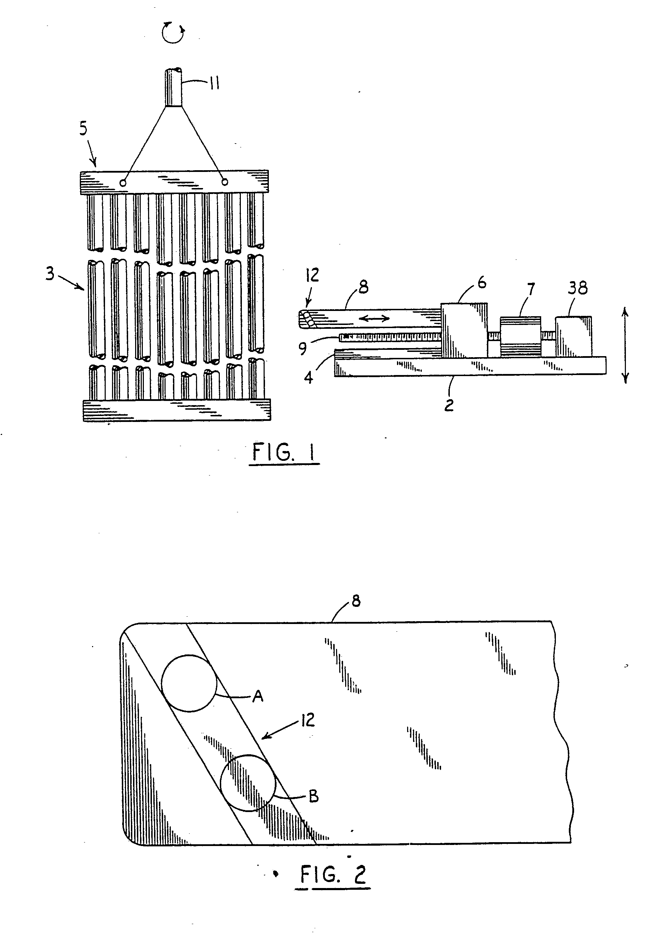

Figure 1 is a side elevational view of part of an apparatus embodying this invention for scanning a row of rods in a nuclear fuel assembly;

Figure 2 is a fragmentary side view on a larger scale of a probe wand shown in Figure 1;

Figure 3 is a schematic view useful in explaining the apparatus; and

Figure 4 is a simplified, elementary one-line wiring diagram of circuitry for producing selected output signals.

A fuel assembly for a light, water-cooled reactor, for instance, typically consists of an array of 15 x 15 closely spaced fuel rods having an active length of about 3.658 m (144 inches). included in an array may be a control rod guide tube and an instrumentation tube which, for the purposes of this description, may be considered as rods.

It has long been recognised that following fabrication, and periodically during use, the rods may be inspected at several points along their length to determine if any abnormalities are present, the severity thereof, and what corrective action, if any, must be taken. An apparatus for inspecting the rods in a fuel assembly at several points along their length is illustrated and described in US-A-4 193 843. As the apparatus so illustrated and described can be used in connection with the apparatus embodying this invention, in the interest of brevity only so much of the apparatus as is necessary for an understanding of the apparatus embodying this invention is herein illustrated and described.

Referring now to the drawings, wherein like reference characters designate like or corresponding parts throughout the several figures, there is shown a support plate 2 which can be elevated by means such as illustrated. and described in the above-mentioned US-A-4 193 843 to selected points along the length of a row of fuel rods 3 in a fuel assembly 5 suspended from a rotatable mast 11. The support plate 2 is provided with ways 4 on which is slidably mounted a carriage 6, shown in a retracted position, carrying a wand 8 provided near its free end with a compound non-contacting proximity sensor 12 provided with responsive elements A and B spaced apart less than the diameter of the rod having the smallest diameter in the row of rods 3. As the carriage 6 is moved from the retracted position to an extended position, or vice versa, by any suitable means, such as a reversing motor 7 and a lead screw 9, the responsive elements A and B consecutively pass by each if the tubes in the row of tubes 3, each producing an electrical effect proportional to its proximity to the tube.

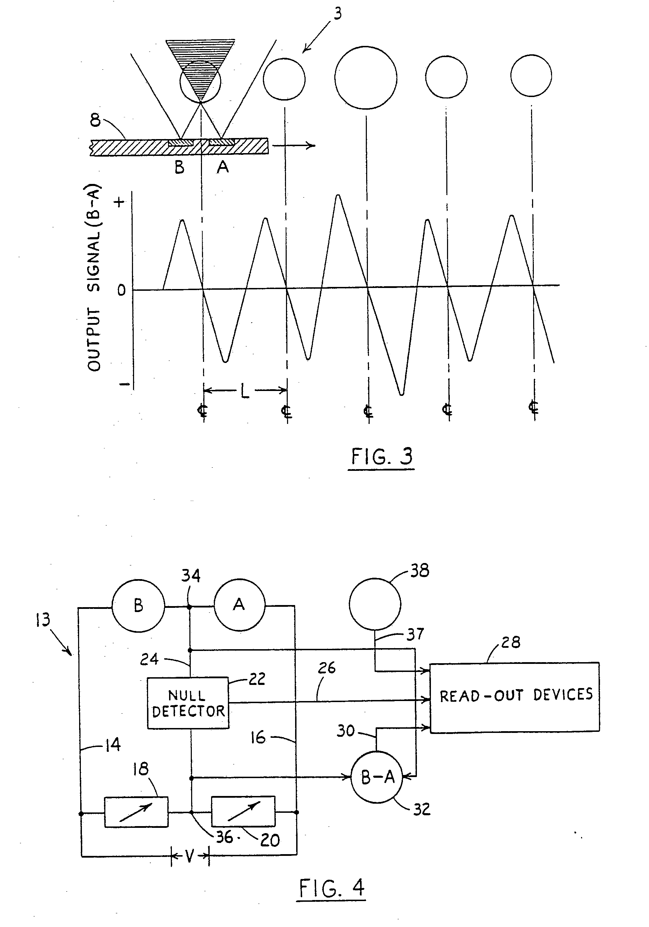

Any one of a variety of circuits may be used to generate selected output signals from the electrical effects produced by the responsive elements A and B. A representative of such circuits is shown in Figure 4. The responsive elements A and B are serially connected in a bridge circuit 13 and energised through. supply leads 14 and 16 from any suitable source of current (not shown). Also connected in series across the leads 14 and 16 are adjustable balancing impedances 18 and 20. With the bridge 13 in balance when the responsive elements A and B are equidistant from a target, such as a rod or two adjacent rods, a null detector 22 in a conjugate conductor 24 generates a unique signal which may be transmitted through a lead 26 to read out devices shown schematically at 28. The circuit may include also a difference unit 32 generating a signal, transmitted through a lead 30 to the devices 28, which is proportional to the difference in potential between connections 34, 36.

To correlate such signals with the distance travelled by the wand 8 in traversing the row of tubes 3, there is also introduced into the devices 28, through a lead 37, a signal generated by an encoder 38 mechanically driven from the lead screw 9. As evident, other devices, such as an LVDT (linear voltage differential transformer) having an armature, for example, attached to the carriage 6 and stationary coils supported from the platform, could also be used to generate a signal proportional to the distance travelled by the wand 8 in making a traverse.

As shown schematically in Figure 3, when the responsive elements A and B are equally distant from a rod, the difference unit 32 produces a unique output signal having, for purposes of illustration, a value of zero. Similarly, when the responsive elements A and B are equally distant from adjacent rods, the output signal from the difference unit 32 will be zero. Thus, by correlating wand travel with zero crossover points, the pitch between adjacent rods at selected points along the length of the rods is determined.

The selection of a particular type of sensor employed depends primarily upon the ambient conditions surrounding the fuel assembly. If the fuel assembly is submerged in the coolant, an ultrasonic or an eddy current sensor would probably be preferably, whereas a capacitance or an eddy current sensor would probably be preferable in a dry environment.

As the fuel assembly 5, when in test position, is suspended from the rotatable mast 11, by rotating the assembly through 90° increments different sets of rows of rods will be presented for scanning by the wand 8.

While a single wand 8 has been illustrated and described, it should be recognised that, as shown in US-A-4 193 843, a plurality of parallel wands sufficient in number simultaneously to scan one set of the row of rods in the fuel assembly would ordinarily be used in practicing this invention.

## Claims

1. Apparatus for measuring the pitch between adjacent rods in a row of spaced-apart rods (3) in a nuclear fuel assembly (5), the apparatus comprising a support plate (2), a carriage (6), and a wand (8) dimensioned to traverse the row of rods (3) and extensibly appended from the carriage (6), the carriage (6) being slidably mounted on the support plate (2) for transversely moving the wand (8) along the row of rods (3), the apparatus being characterised by:
a pair of spaced-apart, non-contacting proximity sensors (A, B) attached to the wand (8) so as consecutively to pass by each of the rods in the row of rods (3) and generate a first and a second output signal, respectively, corresponding to its proximity to a rod as it passes by the rod, the sensors (A, B) being spaced apart less than the outside diameter of the rod of smallest diameter in the row of rods (3);
means (22) for generating a unique signal when the first and second signals are of equal magnitude; and
means (9, 38) for measuring the linear movement of the carriage (6) in transversely moving the wand (8) along the row of rods (3).

2. Apparatus according to claim 1, including means (32) for generating a third output signal proportional to an algebraic sum of a first and second signal from the spaced apart sensors (A, B).

## Patentansprüche

1. Vorrichtung zur Schrittmessung zwischen benachbarten Stäben in einer Reihe von im Abstand angeordneten Stäben (3) in einer Kernbrennstoffanordnung (5), wobei die Vorrichtung eine Stützplatte (2), einen Schlitten (6) und einen Lesekopf (8) aufweist, der so bemessen ist, daß er quer an der Reihe von Stäben (3) vorbeifährt und ausbreitbar am Schlitten (6) angehängt ist, der gleitbar auf der Stützplatte (2) befestigt ist, um den Lesekopf (8) längs der Reihe von Stangen (3) quer zu bewegen, wobei die Vorrichtung gekennzeichnet ist durch:
ein Paar von im Abstand angeordneten, sich nicht berührenden Näherungssensoren (A, B), die an dem Lesekopf (8) so angebracht sind, daß sie nacheinander an jeder der Stangen in der Reihe der Stangen (3) vorbeilaufen und ein erstes bzw. ein zweites Ausgangssignal erzeugen, je nach ihrer Nähe zu einer Stange, wenn er an der Stange vorbeiläuft, wobei die Sensoren (A, B) in einem geringeren Abstand angeordnet sind als der Außendurchmesser der Stange des kleinsten Durchmessers in der Reihe von Stangen (3);
Mittel (22) zur Erzeugung eines eindeutigen Signals, wenn das erste und zweite Signal gleiche Größe haben; und
Mittel (9, 38) zum Messen der linearen Bewegung des Schlittens (6), wenn er den Lesekopf (8) längs der Reihe von Stäben (3) quer bewegt.

2. Vorrichtung nach Anspruch 1, mit Mitteln (32) zur Erzeugung eines dritten Ausgangssignals proportional einer algebraischen Summe eines ersten und zweiten Signals von den im Abstand angeordneten Sensoren (A, B).

## Revendications

1. Dispositif de mesure du pas entre barres adjacentes dans une rangée de barres (3) écartées l'une de l'autre dans un assemblage combustible nucléaire (5), le dispositif comprenant une plaque de support (2), un chariot (6), et une réglette (8) dimensionnée pour parcourir la rangée de barres (3) et en prolongement extensible du chariot (6), le chariot (6) étant monté à coulissement sur la plaque de support (2) pour déplacer transversalement la réglette (8) le long de la rangée de barres (3), le dispositif étant caractérisé par:

une paire de détecteurs de proximité sans contact (A, B) fixés à la réglette (8) de façon à passer consecutivement devant chacune des barres de la rangée de barres (3) et à générer respectivement, un premier et un second signal de sortie, correspondant à sa proximité d'une barre lorsqu'il passe devant la barre, les détecteurs (A, B) étant écartés l'un de l'autre d'une distance inférieure au diamètre extérieur de la barre de plus petit diamètre dans la rangée de barres (3);

des moyens (22) de générer un signal unique quand le premier signal et le second signal sont d'égale grandeur; et

des moyens (9, 38) de mesurer le déplacement linéaire du chariot (6) déplaçant transversalement la réglette (3) le long de la rangée de barres (3).

2. Dispositif selon la revendication 1, comportant des moyens (32) de générer un troisième signal de sortie proportionnel à la somme algébrique d'un premier signal et d'un second signal à partir des détecteurs (A, B) écartés l'un de l'autre.

FIG. 1

FIG. 2

FIG. 3

FIG. 4